(19) Europäisches Patentamt
European Patent Office
Office européen des brevets

(11) **EP 0 926 665 B1**

(12) **EUROPEAN PATENT SPECIFICATION**

(45) Date of publication and mention
of the grant of the patent:
**02.07.2008 Bulletin 2008/27**

(51) Int Cl.:
*G11B 7/09* *(2006.01)*      *G11B 7/13* *(2006.01)*
*G11B 7/135* *(2006.01)*

(21) Application number: **98111079.4**

(22) Date of filing: **17.06.1998**

(54) **Optical information recording/reproducing apparatus**

Optisches Informationsaufzeichnungs-/-wiedergabegerät

Appareil d'enregistrement et de reproduction d'information optique

(84) Designated Contracting States:
**DE FR GB**

(30) Priority: **16.12.1997   JP 34677597**

(43) Date of publication of application:
**30.06.1999   Bulletin 1999/26**

(73) Proprietor: **FUJITSU LIMITED**
**Kawasaki-shi,**
**Kanagawa 211-8588 (JP)**

(72) Inventor: **Tezuka, Koichi**
**Nakahara-ku,**
**Kawasaki-shi,**
**Kanagawa 211-8588 (JP)**

(74) Representative: **Seeger, Wolfgang**
**Georg-Hager-Strasse 40**
**81369 München (DE)**

(56) References cited:
**EP-A- 0 354 019**      **EP-A- 0 582 059**
**EP-A- 0 630 005**      **JP-A- 9 035 284**
**JP-A- 9 097 434**      **US-A- 5 243 585**
**US-A- 5 761 162**

**Description**

BACKGROUND OF THE INVENTION

The present invention generally relates to optical information recording/reproducing apparatuses, and more particularly to an optical information recording/reproducing apparatus which records information on and/or reproduces information from an optical recording medium. An optical information recording/reproducing apparatus according to the upper clause of claim 1 is known from EP-A-0630005.

An optical disk unit is an example of a unit which uses an optical information recording/reproducing apparatus. The optical disk unit can be used as a storage unit of a file system or the like, and is suited for storing programs and large amounts of data. In such an optical disk unit, it is desirable that an optical system thereof can accurately record and/or reproduce the information, and that the number of parts thereof is minimized so as to reduce the cost of the optical disk unit as a whole.

Various techniques have been proposed to detect a focal error in the optical disk unit. Generally, the astigmatism technique and the Foucault technique are well known. The Foucault technique is sometimes also referred to as the double knife edge technique.

Compared to the astigmatism technique, the Foucault technique is less affected by the external disturbance that occurs when a track on an optical disk is traversed, the birefringence of the optical disk. Accordingly, the mixture of the external disturbance into a focal error signal when the Foucault technique is employed is extremely small compared to the case where the astigmatism technique is employed. In addition, the Foucault technique detects a reflected light beam from the optical disk by a photodetector which is arranged in a vicinity of an image formation point of the optical beam, and for this reason, an abnormal offset is unlikely generated in the focal error signal even if the reflected light beam shifts from an optical axis. Because of these advantageous features obtainable by the Foucault technique, it is desirable to employ the Foucault technique as the focal error detection technique.

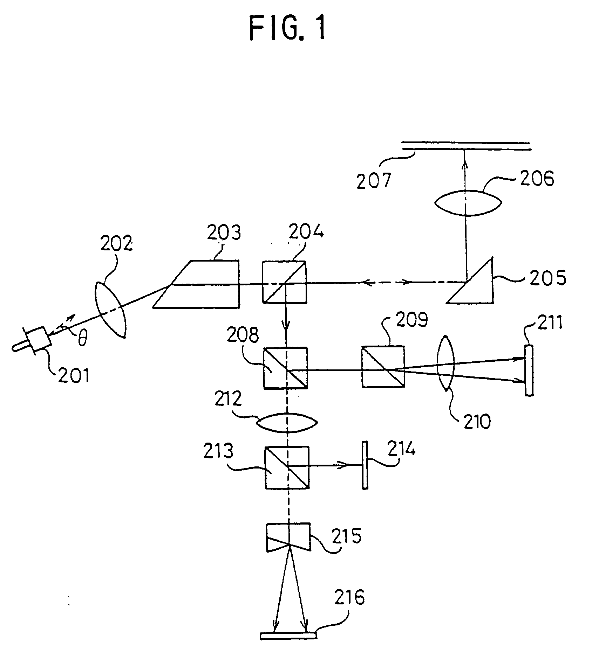

First, an example of an optical information recording/reproducing apparatus within a conventional magneto-optic disk unit which employs the Foucault technique will be described with reference to FIG.1.

In an optical system of the optical information recording/reproducing apparatus shown in FIG.1, a laser beam which is emitted from a laser diode 201 is formed into a parallel beam having an oval cross section in a collimator lens 202, and is thereafter formed into a light beam having a circular cross section in a true circle correction prism 203. The light beam from the true circle correction prism 203 is transmitted through a beam splitter 204, reflected by a mirror 205, and is converged on a disk 207 via an objective lens 206. A reflected light beam from the disk 207 enters the beam splitter 204 via the objective lens 206 and the mirror 205, but this time the reflected light beam is reflected by the beam splitter 204 and is directed towards a beam splitter 208. The beam splitter 208 splits the reflected light beam into two light beams, and supplies one light beam to a magneto-optic signal detection system and the other light beam to a servo signal detection system.

The magneto-optic signal detection system includes a Wollaston prism 209, a lens 210 and a 2-part photodetector 211. One of the two light beams output from the beam splitter 208 is input to the 2-part photodetector 211 via the Wollaston prism 209 and the lens 210, and the 2-part photodetector 211 detects the magneto-optic signal, that is, the information signal, based on the input light beam.

The servo signal detection system includes a condenser lens 212, a beam splitter 213, a 2-part photodetector 214, a composite prism 215 and a 4-part photodetector 216. The other of the two light beams output from the beam splitter 208 is input to the 2-part photodetector 214 via the condenser lens 212 and the beam splitter 213 on one hand, and is input to the 4-part photodetector 216 via the composite prism 215 on the other. The 2-part photodetector 214 forms a tracking error detection system in the servo signal detection system, and generates a .tracking error signal by obtaining a difference between the outputs of the 2-part photodetector 214 according to the push-pull technique. The composite prism 215 and the 4-part photodetector 216 form a focal error detection system in the servo signal detection system, and generates a focal error signal based on outputs of the 4-part photodetector 216 according to the Foucault technique. A focus servo operation controls the relative positional relationship of the objective lens 206 and the disk 207 based on the focal error signal, so that an in-focus position is located on the disk 207.

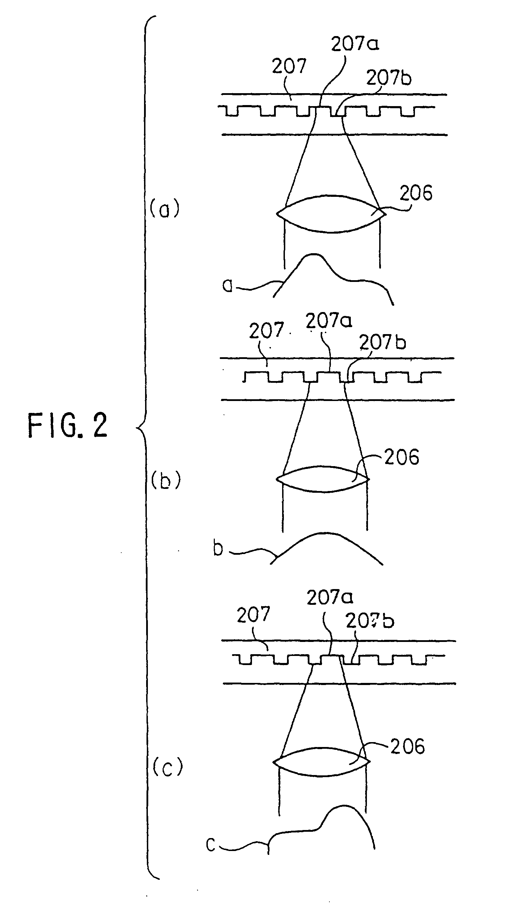

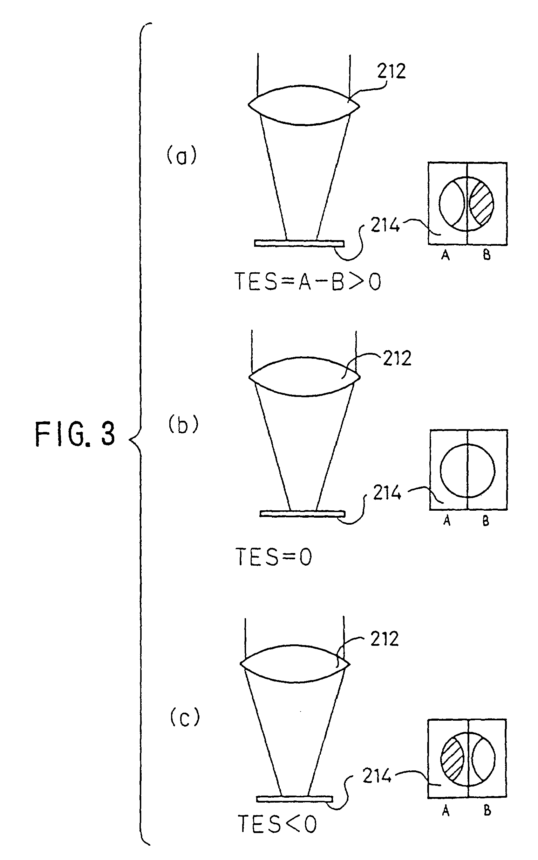

Next, a description will be given of the push-pull technique, by referring to FIGS.2 and 3. FIGS.2(a), 2(b) and 2(c) show the relative positional relationship of the light beam which is irradiated via the objective lens 206 and the track on the disk 207, and FIGS.3(a), 3(b) and 3(c) show a spot of the reflected light beam which is formed on the 2-part photodetector 214 in correspondence with FIGS.2(a), 2(b) and 2(c).

FIG.2(b) shows a case where the spot of the light beam is positioned at the center of a guide groove 207a of the disk 207. In this case, the spot of the reflected light beam on the 2-part photodetector 214 is formed as shown in FIG.3(b), and a light intensity distribution $\underline{b}$ is symmetrical to the right and left. If the outputs of the 2-part photodetector 214 are denoted by A and B, a tracking error signal TES is generated based on the following formula (1).

$$TES = A - B \qquad\qquad --- (1)$$

In this case, the tracking error signal TES is 0.

If the spot of the light beam in FIG.2(b) shifts to the right as shown in FIG.2(a), a light intensity distribution a of the reflected light beam becomes unbalanced and the light intensity at the left detector part of the 2-part photodetector 214 becomes larger as shown in FIG.3(a). For this reason, the tracking error signal TES in this case takes a positive value.

On the other hand, if the spot of the light beam in FIG.2(b) shifts to the left as shown in FIG.2(c), a light intensity distribution c of the reflected light beam becomes unbalanced and the light intensity at the right detector part of the 2-part photodetector 214 becomes larger as shown in FIG.3(c). For this reason, the tracking error signal TES in this case takes a negative value.

Accordingly, if the spot of the light beam on the disk 207 shifts to the right or left with respect to the central position of the guide groove 207a, the tracking error signal TES which is obtained in the above described manner changes to a more positive or negative value. Thus, it is possible to carry out an appropriate tracking control operation based on the tracking error signal TES.

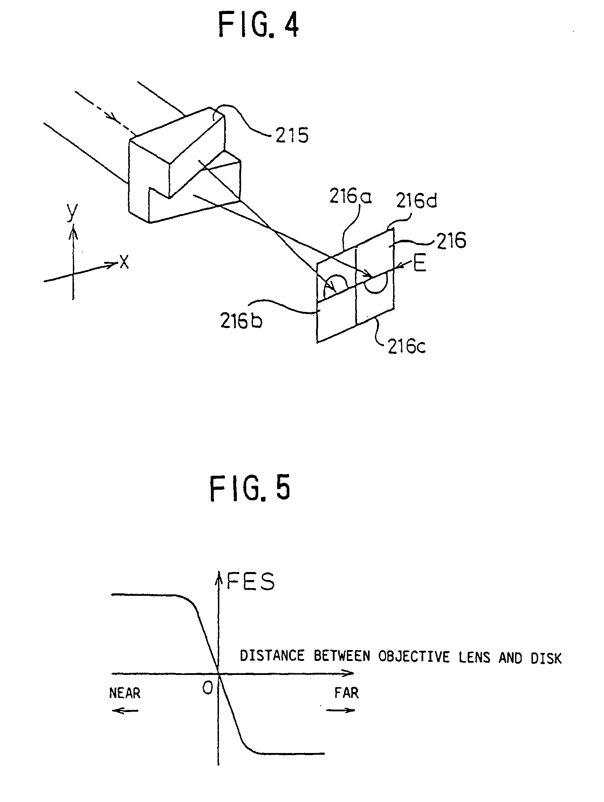

FIG.4 shows an example of the shapes of the composite prism 215 and the 4-part photodetector 216. The 4-part photodetector 216 includes detector parts 216a, 216b, 216c and 216d. A focal error signal FES is generated from outputs A, B, C and D respectively output from the detector parts 216a, 216b, 216c and 216d of the 4-part photodetector 216, based on the following formula (2).

$$FES = (A-B)+(C-D) \qquad\qquad --- (2)$$

Ideally, the focal error signal FES is 0 in a state where the spot of the light beam is in focus on the disk 207. In this case, the focal error signal FES having an S-curve as shown in FIG. 5 is obtained depending on the distance between the objective lens 206 and the disk 207. In FIG. 5, the ordinate indicates the focal error signal FES, and the abscissa indicates the distance between the objective lens 206 and the disk 207. The origin (0) on the abscissa corresponds to the in-focus position, and the above distance becomes smaller towards the left and larger towards the right in FIG. 5.

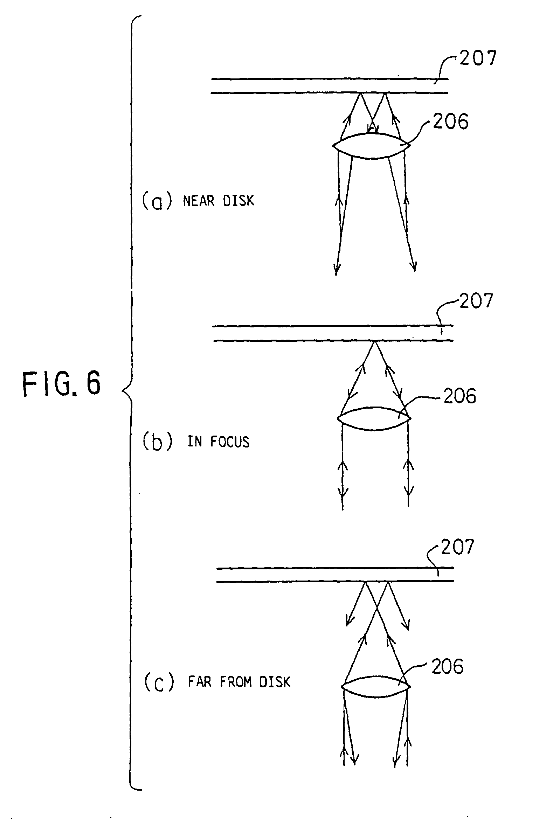

FIGS.6(a), 6(b) and 6(c) show the relative positional relationship of the objective lens 206 and the disk 207. FIG.6(a) shows a case where the objective lens 206 is close to the disk 207 and the in-focus position is located above the disk 207 in the figure, FIG.6(b) shows a case where the in-focus position is located on the disk 207, and FIG.6(c) shows a case where the objective lens 296 is far from the disk 207 and the in-focus position is located between the disk 207 and the objective lens 206 in the figure.

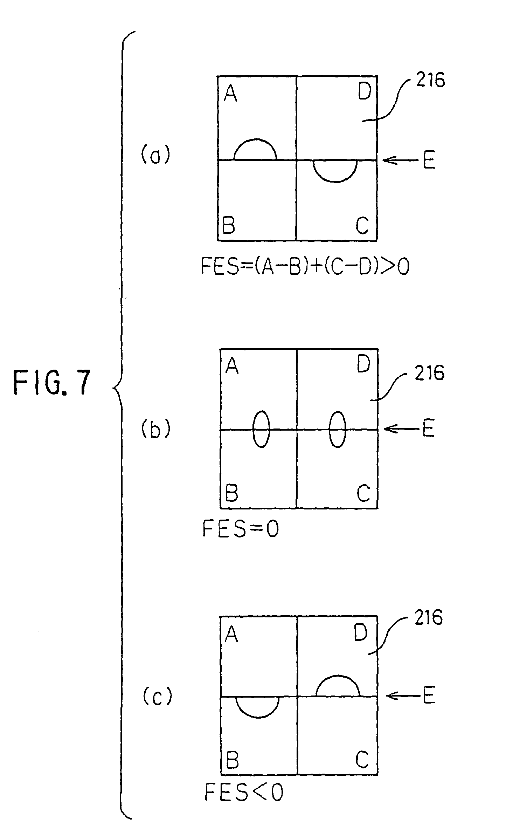

FIGS.7(a), 7(b) and 7(c) show beam spots on the 4-part photodetector 216 for each relative positional relationship of the objective lens 206 and the disk 207 shown in FIGS.6(a), 6(b) and 6(c). FIG.7(a) shows the beam spots for the positional relationship shown in FIG.6(a), FIG.7(b) shows the beam spots for the in-focus positional relationship shown in FIG.6(b), and FIG.7(c) shows the beam spots for the positional relationship shown in FIG.6(c). As shown in FIG.7(b), the beam spots on the 4-part photodetector 216 have oval shapes in the in-focus position, and a division line E of the 4-part photodetector 216 is positioned at the center of each oval beam spot.

However, in the actual disk unit, the distribution of the quantity of the light beam irradiated on the disk 207 may be unbalanced, and errors may exist in the mounting positions of the composite prism 215 and the 4-part photodetector 216.

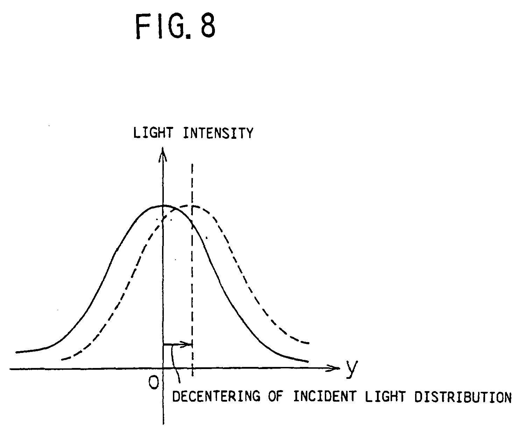

The light intensity distribution of the light beam which is emitted from the laser diode 201 can generally be approximated by a Gaussian distribution. Hence, if the optical axis of the light beam emitted from the laser diode 201 matches the optical axes of other optical parts, it is possible to obtain a Gaussian distribution in which the center of the light intensity of the light beam input to the objective lens 206 matches the optical axis (point 0) shown in FIG.8. However, if the light beam emitted from the laser diode 201 is inclined by an angle θ in FIG.1, the center of the light intensity of the light beam input to the objective lens 206 is shifted from the optical axis (point 0) in the Gaussian distribution as indicated by a dotted line in FIG.8. The "unbalanced distribution" of the light quantity of the light beam irradiated on the disk 207 or "decentering", refers to such a difference between the optical axis and the center of light beam intensity distribution.

On the other hand, the "mounting error" of the composite prism 215, for example, refers to a positional error of the composite prism 215 in a y-direction in FIG.4. If such a mounting error exists, the composite prism 215 cannot accurately split the incident light beam into two equal light beams. Generally, if the division line E of the composite prism 215 shifts a distance $\Delta y$ in the y-direction from the center of the incident light beam, where the division line E extends in the x-direction in FIG.4, the value of the mounting error can be obtained from [Δy/(diameter of light beam)]·100 (%).

For this reason, if the quantity of the light beam which is split into two in the composite prism 215 changes and a positional error of the division line E of the 4-part photodetector 216 occurs, a focal offset is generated. The generation of the "focal offset" means that the focal error signal FES described by the formula (2) becomes 0 at a position other than the in-focus position. Thus, according to the conventional Foucault technique, the tolerable margin of the focal error detection system is extremely small with respect to the unbalanced distribution of the quantity of light beam irradiated on the disk 207, the mounting error of the composite prism 215 and the 4-part photodetector 216 and the like. Therefore, there is a problem in that it is extremely difficult to obtain an accurate focal error signal due to the above error factors.

## SUMMARY OF THE INVENTION

Accordingly, it is a general object of the present invention to provide a novel and useful optical information recording/reproducing apparatus in which the problems described above are eliminated.

Another and more specific object of the present invention to provide an optical information recording/reproducing apparatus which can obtain an accurate focal error signal by setting a large tolerable margin of a focal error detection system with respect to the various causes of the above described errors.

These objects are achieved by the features of claim 1.

According to the optical information recording/reproducing apparatus of the present invention, it is possible to obtain an accurate focal error signal by making a tolerable margin of a focal error detection system large with respect to various causes of the errors described above. In addition, it is possible to obtain a focal error signal, a tracking error signal and an optical signal having a high signal quality. Further, by reducing the number of required parts, it is possible to simplify the production process of the optical information recording/reproducing apparatus, and to reduce the cost of the optical information recording/reproducing apparatus.

A further object of the present invention is to provide an optical information recording/reproducing apparatus which records information on and/or reproduces information from an optical recording medium based on a reflected light beam from the optical recording medium, comprising a light splitting part having a plurality of light splitting stages which split the reflected light beam from the optical recording medium into a plurality of light beams, and a photodetector unit including m photodetectors which receive m light beams output from a last stage of the light splitting part, where m is a positive integer, where the m photodetectors of the photodetector unit include a plurality of photodetectors which are arranged to receive light beams used to detect a focal error, at least one photodetector which is arranged to receive a light beam used to detect a tracking error, and a plurality of photodetectors which are arranged to receive in common light beams used to detect optical information recorded on the optical recording medium, the light splitting part comprises an analyzer which splits an incoming light beam into a plurality of polarized light beams and an optical element which spatially splits an incoming light beam into a plurality of light beams, the analyzer and the optical element are arranged in an arbitrary order between the optical recording medium and the photodetector unit, the plurality of photodetectors which are arranged to receive the light beams used to detect the focal error, out of the m photodetectors of the photodetector unit, receive only one of the polarized light beams output from the analyzer, the optical element comprises a first deflection part having a curvature with respect to a optical axis of the reflected light beam from the optical recording medium, second and third deflection parts, provided on both sides of the first deflection part, which are tapered in mutually different directions with respect to the optical axis, and fourth and fifth deflection parts, provided on outer sides of the second and third deflection parts, which lie on a curved surface having the same curvature as the first deflection part which also lies on the curved surface. According to the optical information recording/reproducing apparatus of the present invention, it is possible to obtain an accurate focal error signal by making a tolerable margin of a focal error detection system large with respect to various causes of the errors described above. In addition, it is possible to obtain a focal error signal, a tracking error signal and an optical signal having a high signal quality.

Other objects and further features of the present invention will be apparent from the following detailed description when read in conjunction with the accompanying drawings,

## BRIEF DESCRIPTION OF THE DRAWINGS

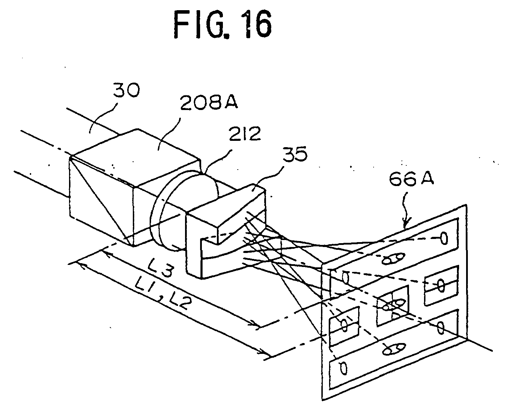

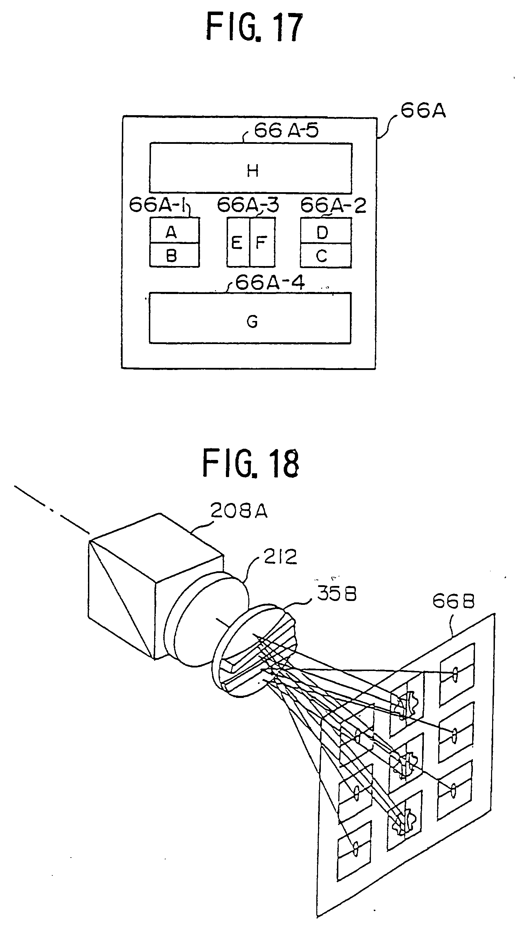

The structures shown in and described in connection with Figs. 16 and 17 are embodiments of the present invention. The other figures and description are helpful for understanding the invention.

FIG.1 is a diagram showing an example of a conventional optical information recording/reproducing apparatus;

FIGS.2(a) through 2(c) respectively are diagrams showing the relative positional relationship between a light beam which is irradiated via an objective lens and a track on an optical disk for explaining the push-pull technique;

FIGS.3(a) through 3(c) respectively are diagrams showing a spot of a reflected light beam which is formed on a 2-part photodetector;

FIG.4 is a perspective view showing an example of the shapes of a composite prism and a 4-part photodetector;

FIG. 5 is a diagram showing the relationship of a distance between the objective lens and the disk and a focal error signal FES;

FIGS.6(a) through 6(c) respectively are diagrams showing the relative positional relationship of the objective lens and the disk;

FIGS.7(a) through 7(c) respectively are diagrams showing a spot of a reflected light beam which is formed on the 4-part photodetector;

FIG.8 is a diagram showing a Gaussian distribution;

FIG.9 is a diagram showing an optical information recording/reproducing apparatus;

FIG.10 is a perspective view showing an important part of Fig.9;

FIG.11 is a plan view showing a photodetector unit of Fig.9;

FIGS.12A, 12B, 12C and 12D respectively are diagrams showing circuit structures for computing formulas (3a), (3b), (3c) and (3d);

FIGS.13A and 13B respectively are diagrams showing circuit structures for computing formulas ((4a) and (4b);

FIGS.14A and 14B respectively are diagrams showing circuit structures for computing formulas (5a) and (5b);

FIG.15 is a diagram showing a circuit structure for computing a formula (6);

FIG.16 is a perspective view showing an important part of a first embodiment of the optical information recording/ reproducing apparatus according to the present invention;

FIG.17 is a plan view showing a photodetector unit of the first embodiment;

FIG.18 is a perspective view showing an important part of a further embodiment of the optical information recording/ reproducing apparatus according to the present invention;

FIG.19 is a perspective view showing a composite prism of the further embodiment;

FIG.20 is a plan view showing a photodetector unit of the further embodiment;

FIG.21 is a perspective view showing an embodiment of the composite prism; and

FIC3S.22(a) through 22(d) respectively are diagrams showing circuit structures for computing formulas (7) through (10) in the first embodiment.

## DESCRIPTION OF THE PREFERRED EMBODIMENTS

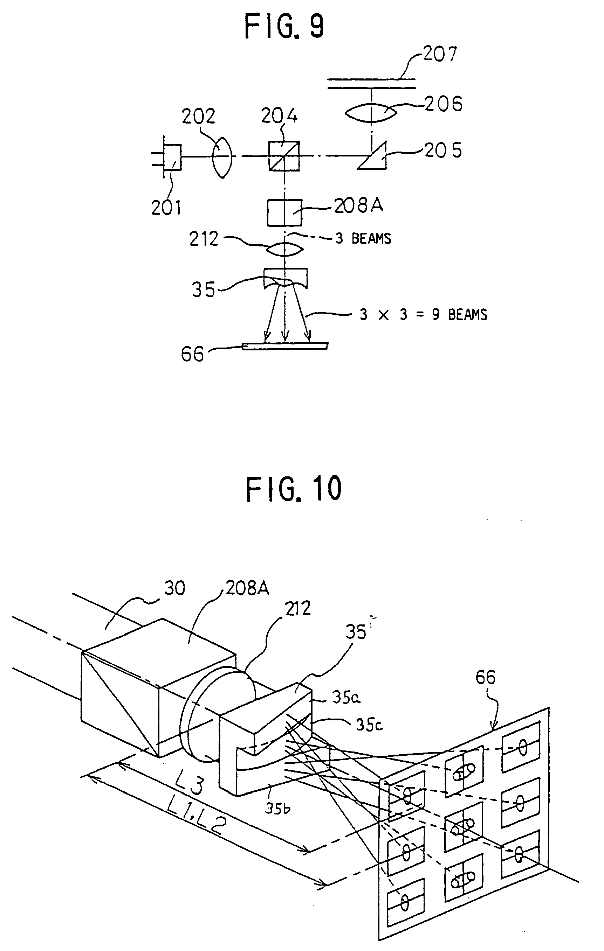

A description will be given of a first embodiment of an optical information recording/reproducing apparatus by referring to FIGS.9, 10 and 11 which reflect said EP-A-0 630 005. In FIG.9, those parts which are the same as those corresponding parts in FIG.1 are designated by the same reference numerals, and a description thereof will be omitted.

The beam splitter 213 and the 2-part photodetector 214 shown in FIG.1 are unnecessary. In addition, an analyzer 208A is provided in place of the beam splitter 208. Further, a composite prism 35 and a photodetector unit 36 are provided in place of the composite prism 215 and the 4-part photodetector 216. A central portion of the reflected light beam from the disk 207 is used for the detection of the tracking error using the push-pull technique.

As shown in FIG.10, the composite prism 35 includes a first deflection surface 35a which is tapered, a second deflection surface 35b which is tapered in a direction different from the taper of the first deflection surface 35a, and a third deflection surface 35c having a slight curvature with respect to the optical axis of the reflected light beam from the disk 207.

For example, an analyzer 21 disclosed in a Japanese Laid-Open Patent Application No.63-127436 may be used as the analyzer 208A. The light beam is split into three light beams by the analyzer 208A, and each of the three light beams is further split into three light beams by the composite prism 35, thereby resulting in nine (3 x 3 = 9) light beams being output from the composite prism 35. The nine light beams from the composite prism 35 are irradiated on corresponding ones of nine photodetectors 66a through 66i which form the photodetector unit 66.

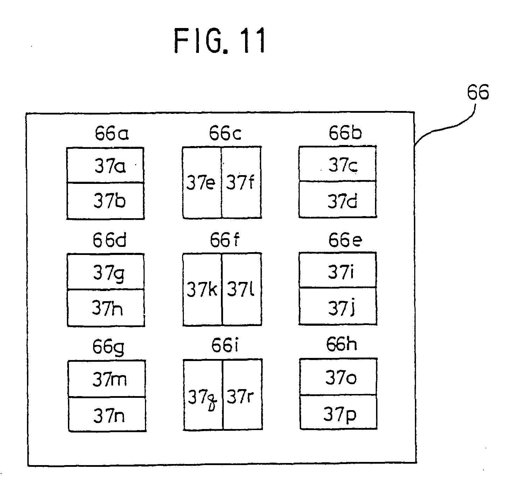

FIG.11 shows a plan view of the photodetector unit 66. The focal error signal FES can be generated according to the Foucault technique based on outputs of the photodetectors 66a, 66b, 66d, 66e, 66g and 66h of the photodetector unit 66. The photodetectors 66a, 66d and 66g receive the three light beams from the first part of the composite prism 35, while the photodetectors 66b, 66e and 66h receive the three light beams from the second part of the composite prism 35. The image formation points of these six light beams match the positions of the photodetectors 66a, 66b, 66d, 66e, 66g and 66h. On the other hand, the tracking error signal TES can be generated according to the push-pull technique based on outputs of the photodetectors 66c, 66f and 66i. The photodetectors 66c, 66f and 66i receive the three light beams from the third part of the composite prism 35. The image formation points of these three light beams are deviated from the positions of the photodetectors 66c, 66f and 66i.

As shown in FIG.11, the photodetector 66a includes photodetector parts 37a and 37b, the photodetector 66b includes photodetector parts 37c and 37d, ..., and the photodetector 66i includes photodetector parts 37q and 37r. Accordingly, if the outputs of these photodetector parts 37a through 37i are denoted by the same reference numerals as these parts, the focal error signal FES using the Foucault technique can be generated based on any one of the following formulas (3a) through (3d) by calculation.

$$FES = [(37a)+(37g)+(37m)+(37d)+(37j)+(37p)]-$$
$$[(37b)+(37h)+(37n)+(37c)+(37i)+(37o)]$$
$$--- (3a)$$

$$FES = [(37a)+(37p)]-[(37b)+(37o)]$$
$$--- (3b)$$

$$FES = [(37m)+(37d)]-[(37n)+(37c)]$$
$$--- (3c)$$

$$FES = [(37a)+(37d)+(37m)+(37p)]-[(37b)+(37c)$$
$$+(37n)+(37o)]$$
$$--- (3d)$$

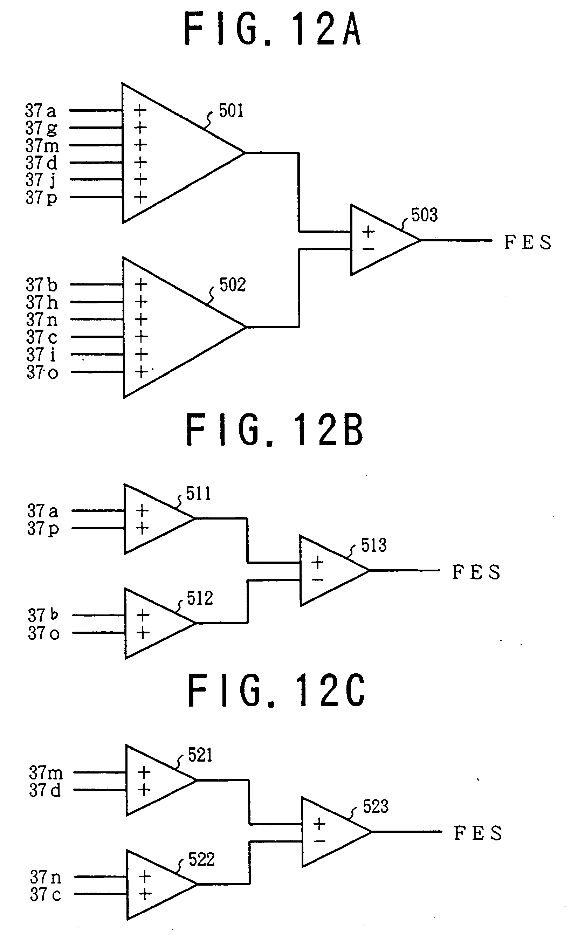

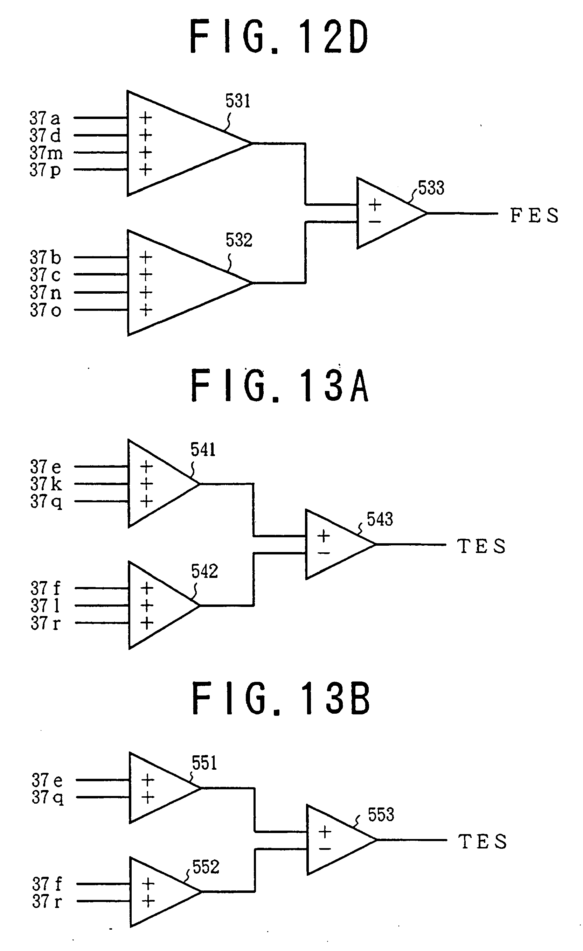

FIG.12A is a circuit diagram showing a circuit structure for computing the formula (3a) to obtain the focal error signal FES. In FIG.12, an adder adds the outputs of the photodetector parts 37a, 37g, 37m, 37d, 37j and 37p, and an adder 502 adds the outputs of the photodetector parts 37b, 37h, 37n, 37c, 37i and 37o. A subtracter 503 subtracts an output of the adder 502 from an output of the adder 501, and produces the focal error signal FES.

FIG.12B is a circuit diagram showing a circuit structure for computing the fomula (3b) to obtain the focal error signal FES. In FIG.12B, an adder 511 adds the outputs of the photodetector parts 37a and 37p, and an adder 512 adds the outpputs of the photodetector parts 37b and 37o. A subtracter 513 subtracts an output of the adder 512 from an output of the adder 511, and produces the focal error signal FES.

FIG.12C is a circuit diagram showing a circuit structure for computing the formula (3c) to obtain the focal error signal FES. In FIG.12C, an adder adds the outputs of the photodetector parts 37m and 37d, and an adder 522 adds the outputs of the photodetector parts 37n amd 37c. A subtracter 523 subtracts an output of the adder 522 from an output of the adder 521, and produces the focal error signal FES.

FIG.12D is a circuit diagral showing a circuit structure for computing the formula (3d) to obtain the focal error signal FES. In FIG.12D, an adder adds the outputs of the photodetector parts 37a, 37d, 37m and 37p, and an adder 532 adds the outputs of the photodetector parts 37b, 37c, 37n and 37o. A subtracter 533 subtracts an output of the adder 532 from an output of the adder 531, and produces the focal error signal FES.

The focal error signal FES obtained by the formula (3a) has a high signal-to-noise (S/N) ratio and is uneasily affected by external disturbances because all of the beams irradiated on the photodetector unit 66 is used and consequently a large amount of light is used to detect the focal error signal FES.

On the other hand, the focal error signal FES obtained by the formula (3b) or (3c) enables easy and simple adjustments since only two beams are used to detect the focal error signal FES and thus only two beams need to be irradiated on corresponding two photodetectors 66a and 66h or, 66b and 66g, of the photodetector unit 66 so that each beam irradiates a division line separating the two photodetector parts forming each of the photodetectors 66a and 66h or, 66b and 66g.

Furthermore, the focal error signal FES obtained by the formula (3d) can obtain, to a certain extent, the above described effects obtainable with respect to the focal error signals FES obtained by the formulas (3a) and (3b) or (3c). In addition, in the case of the focal error signal FES obtained by the formula (3d), the required adjustments are simpler compared to the case of the focal error signal FES obtained by the formula (3a). Moreover, the focal error signal FES obtained by the formula (3d) has a higher S/N ratio and is less affected by external disturbances as compared to the focal error signal FES obtained by the formulas (3b) or (3c).

The focal error signal FES according to the above described formulas (3a) through (3d) can be generated by use of known adders and subtracter.

The tracking error signal TES using the push-pull technique can be generated based on one of the following formulas (4a) and (4b) by calculation.

$$\mathrm{TES = [(37e)+(37k)+(37q)]-[(37f)+(37l)+(37r)]} \qquad \text{--- (4a)}$$

$$\mathrm{TES = [(37e)+(37q)]-[(37f)+(37r)]} \qquad \text{--- (4b)}$$

FIG.13A is a circuit diagram showing a circuit structure for computing the formula (4a) to obtain the tracking error signal TES. In FIG.13A, an adder 541 adds the outputs of the photodetector parts 37e, 37k and 37q, and an adder 542 adds the outputs of the photodetector parts 37f, 37l and 37r. A subtracter 543 subtracts an output of the adder 542 from an output of the adder 541, and produces the tracking error signal TES.

FIG.13B is a circuit diagram showing a circuit structure for computing the formula (4b) to obtain the tracking error signal TES. In FIG.13B, an adder 551 adds the outputs of the photodetector parts 37e and 37q, and an adder 552 adds the outputs of the photodetector parts 37f and 37r. A subtracter 553 subtracts an output of the adder 552 from an output of the adder 551, and produces the tracking error signal TES.

The tracking error signal TES obtained by the formula (4a) has a high S/N ratio and is uneasily affected by external disturbances because all of the beams irradiated on the photodetector unit 66 is used and consequently a large amount of light is used to detect the tracking error signal TES.

On the other hand, the tracking error signal TES obtained by the formula (4b) enables easy and simple adjustments since only two beams are used to detect the tracking error signal TES and thus only two beams need to be irradiated on corresponding two photodetectors 66c and 66i of the photodetector unit 66 so that each beam irradiates a division line separating the two photodetector parts forming each of the photodetectors 66c and 66i.

Furthermore, by the function of the analyzer 208A, a magneto-optic signal (information signal) MO which is recorded on the disk 207 can be reproduced based on one of the following formulas (5a) and (5b) by calculation.

The tracking error signal TES according to the above described formulas (4a) and (4b) can be generated by use of known adders and subtracter.

$$\mathrm{MO = [(37a)+(37b)+(37e)+(37f)+(37c)+(37d)]-}$$
$$\mathrm{[(37m)+(37n)+(37q)+(37r)+(37o)+(37p)]} \qquad \text{--- (5a)}$$

$$\mathrm{MO = [(37a)+(37b)+(37c)+(37d)]-[(37m)+(37n)}$$
$$\mathrm{+(37o)+(37p)]} \qquad \text{--- (5b)}$$

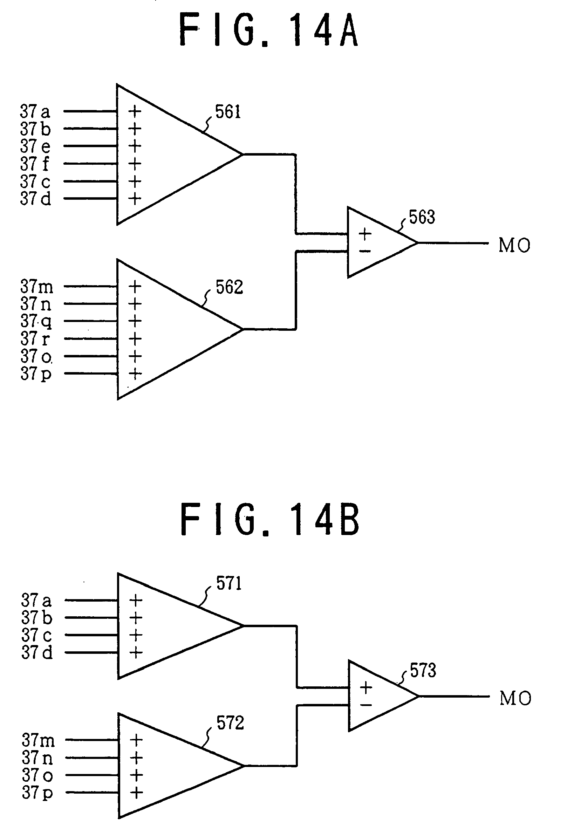

FIG.14A is a circuit diagram showing a circuit structure for computing the formula (5a) to obtain the magneto-optic signal MO. In FIG.14A, an adder 561 adds the outputs of the photodetector parts 37a, 37b, 37e, 37f, 37c and, 37d, and an adder 562 adds the outputs of the photodetector parts 37m, 37n, 37q, 37r, 37o and 37p. A subtracter 563 subtracts an output of the adder 562 from an output of the adder 561, and produces the magneto-optic signal MO.

FIG.14B is a circuit diagram showing a circuit structure for computing the formula (5b) to obtain the magneto-optic signal MO. In FIG.14B, an adder 571 adds the outputs of the photodetector parts 37a, 37b, 37c and 37d, and an adder 572 adds the outputs of the photodetector parts 37m, 37n, 37o and 37p. A subtracter 573 subtracts an output of the adder 572 from an output of the adder 571, and produces the magneto-optic signal MO.

According to the magneto-optic signal MO obtained by the formula (5a), it is possible to obtain an average signal amplitude which is relatively large. On the other hand, according to the magneto-optic signal MO obtained by the formula (5b), it is possible to obtain a relatively high resolution.

The magneto-optic signal MO according to the above described formulas (5a) and (5b) can be generated by use of known adders and subtracter.

The disk 207 is also recorded with positional information which indicates a track, sector and the like on the disk 207. This positional information is often referred to as an identification signal ID, and this identification signal ID can be recorded in the form of pits on the disk 207 as is well known. The identification signal ID can be reproduced based on the following formula (6) by calculation. In other words, the magneto-optic signal MO is reproduced by obtaining a difference between the outputs of the adders, while the identification signal ID is reproduced by obtaining a sum of the outputs of the adders.

$$ID = [(37a)+(37b)+(37e)+(37f)+(37c)+(37d)]+$$
$$[(37m)+(37n)+(37q)+(37r)+(37o)+(37p)]$$
$$--- (6)$$

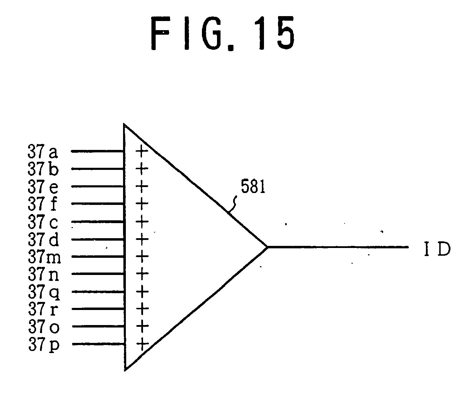

FIG.15 is a circuit diagram showing a circuit structure for computing the formula (6) to obtain the identification signal ID. In FIG.15, an adder 581 adds the outputs of the photodetector parts 37a, 37b, 37e, 37f, 37c, 37d, 37m, 37n, 37q, 37r, 37o and 37p, and produces the identification signal ID.

The identification signal ID according to the above described formula (6) can be generated by use of known adders.

The magneto-optic signal detection system and the servo signal detection signal can be provided approximately on a single optical path, and it is therefore possible to further reduce both the size and cost of the optical information recording/reproducing apparatus.

An image formation point of the light beam used to generate the focal error signal FES according to the Foucault technique using the composite prism, and an image formation point of the light beam used to generate the tracking error signal TES according to the push-pull technique, are made mutually different, However, the method of making the image formation points of the light beams mutually different is of course not limited to the above described method using the composite prism, and it is possible to use a holographic optical element, for example.

Next, a description will be given of a first embodiment of the optical information recording/reproducing apparatus according to the present invention, by referring to FIGS.16 and 17. FIG.16 is a perspective view showing an important part of the first embodiment, and FIG.17 is a plan view showing a photodetector unit of the first embodiment. In FIG.16, those parts which are the same as those corresponding parts in FIG.10 are designated by the same reference numerals, and a description thereof will be omitted.

In this embodiment, a photodetector unit 66A shown in FIG.16 is used in place of the photodetector unit 66 shown in FIG.10. FIG.17 shows a plan view of the photodetector unit 66A. As shown in FIG.17, the photodetector unit 66A includes 2-part photodetectors 66A-1, 66A-2 and 66A-3, and photodetectors 66A-4 and 66A-5. The 2-part photodetector 66A-1 includes photodetector parts A and B. The 2-part photodetector 66A-2 includes photodetector parts C and D. The 2-part photodetector 66A-3 includes photodetector parts E and F. The photodetector 66A-4 includes a photodetector part G, and the photodetector 66A-5 includes a photodetector part H.

Accordingly, if the outputs of these photodetector parts A through H are denoted by the same reference characters as these parts, the focal error signal FES using the Foucault technique can be generated based on the following formula (7) by calculation.

$$FES = (A+C)-(B+D) \qquad --- (7)$$

The focal error signal FES according to the above described formula (7) can be generated by use of known adders and subtracter.

In addition, the tracking error signal TES using the push-pull technique can be generated based on the following formula (8) by calculation.

$$TES = E-F \qquad\qquad --- (8)$$

The tracking error signal TES according to the above described formula (8) can be generated by use of a known subtracter.

Furthermore, by the function of the analyzer 208A, the magneto-optic signal MO which is recorded on the disk 207 can be reproduced based on the following formula (9) by calculation.

$$MO = G-H \qquad\qquad --- (9)$$

The magneto-optic signal MO according to the above described formula (9) can be generated by use of a known subtracter.

Moreover, the identification signal ID which is recorded on the disk 207 can be reproduced based on the following formula (10) by calculation.

$$ID = G+H \qquad\qquad --- (10)$$

The identification signal ID according to the above described formula (10) can be generated by use of a known adder.

As may be seen from FIG.17 and the formulas (7) through (10) described above, this embodiment can obtain the focal error signal FES, the tracking error signal TES, the magneto-optic signal MO and the identification signal ID by use of a smaller number of photodetectors (or photodetector parts) and a smaller number of adders as compared to the apparatus shown in Fig.9 Hence, due to the smaller number of photodetectors (or photodetector parts) used, a stray capacitance of the photodetectors can be reduced. In addition, due to the smaller number of adders used, a noise generated by the adders within a large scale integrated circuit (LSI) can be reduced compared to the apparatus shown in Fig.9.

Compared to servo signals such as the focal error signal FES and the tracking error signal TES, the magneto-optic signal MO and the identification signal ID require higher frequency bands, and consequently, higher signal-to-noise (S/N) ratios. The stray capacitance and noise described above affect the S/N ratios of the magneto-optic signal MO and the identification signal ID, however, this embodiment can further improve the S/N ratios of the magneto-optic signal MO and the identification signal ID compared to the apparatus shown in Fig.9 due to the smaller number of photodetectors (or photodetector parts) and the smaller number of adders used to reproduce these signals MO and ID.

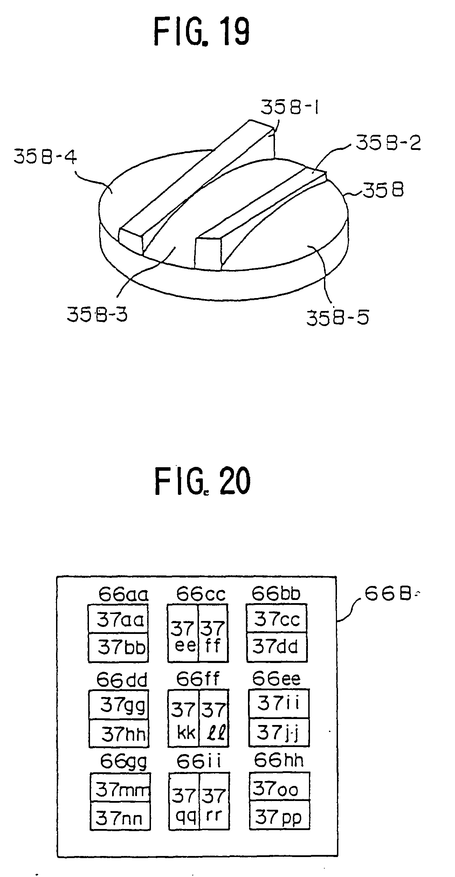

Next, a description will be given of a further embodiment of the optical information recording/reproducing apparatus according to the present invention, by referring to FIGS.18 through 20. FIG.18 is a perspective view showing an important part of the further embodiment, and FIG.19 is a perspective view showing a composite prism of the further embodiment. FIG.20 is a plan view showing a photodetector unit of the further embodiment. In FIG.18, those parts which are the same as those corresponding parts in FIG.10 are designated by the same reference numerals, and a description thereof will be omitted.

In this embodiment, a composite prism 35B and a photodetector unit 66B shown in FIG.18 are provided in place of the composite prism 35 and the photodetector unit 66 shown in FIG.10. In addition, the reflected light beam from the disk 207 is split into three light beams by the analyzer 208A, and each of the three light beams is further split into five light beams by the composite prism 35B, thereby resulting in fifteen (3 x 5 = 15) light beams being output from the composite prism 35B. The fifteen light beams from the composite prism 35B are irradiated on corresponding ones of nine photodetectors 66aa through 66ii which form the photodetector unit 66B.

FIG.19 shows a perspective view of the composite prism 35B. As shown in FIG.19, the composite prism 35B includes tapered first and second parts 35B-1 and 35B-2, a central third part 35B-3 which has a convex surface with a slight curvature, and peripheral fourth and fifth parts 35B-4 and 35B-5 which have convex surfaces with a slight curvature matching that of the third part 35B-3. In other words, the third, fourth and fifth parts 35B-3, 35B-4 and 35B-5 are all parts of a single convex surface having a slight curvature. The first and second parts 35B-1 and 35B-2 function similarly to the first and second parts 35a and 35b of the composite prism 35.

FIG.20 shows a plan view of the photodetector unit 66B. As shown in FIG.20, the photodetector unit 66B includes photodetectors 66aa through 66ii. The photodetector 66aa includes photodetector parts 37aa and 37bb, the photodetector 66bb includes photodetector parts 37cc and 37dd, ..., and the photodetector 66ii includes photodetector parts-37qq and 37rr.

The three light beams output from the third part 35B-3 of the composite prism 35B are respectively irradiated on the photodetectors 66cc, 66ff and 66ii. The three light beams output from the fourth part 35B-4 of the composite prism 35B are respectively irradiated on the photodetectors 66cc, 66ff and 66ii. Further, the three light beams output from the fifth part 35B-5 of the composite prism 35B are respectively irradiated on the photodetectors 66cc, 66ff and 66ii. On the other hand, the three light beams output from the first part 35B-1 of the composite prism 35B are respectively irradiated on the photodetectors 66aa, 66dd and 66gg. The three light beams output from the second part 35B-2 of the composite prism 35B are respectively irradiated on the photodetectors 66bb, 66ee and 66hh.

The image formation points of the six light beams output from the first and second parts 35B-1 and 35B-2 match the positions of the photodetectors 66aa, 66bb, 66dd, 66ee, 66gg and 66hh. On the other hand, the image formation points of the three light beams output from each of the third, fourth and fifth parts 35B-3, 35B-4 and 35B-5 are deviated from the positions of the photodetectors 66cc, 66ff and 66ii.

If the outputs of the photodetector parts 37aa through 37ii of the photodetector unit 66B are denoted by the same reference numerals as these parts, the focal error signal FES using the Foucault technique, the tracking error signal TES using the push-pull technique and the identification signal ID can be obtained by calculations similarly to the embodiment described above based on the formulas (3a) through (3d), (4a), (4b) and (6).

Furthermore, the magneto-optic signal MO recorded on the disk 207 can be reproduced based on one of the following formulas (11a) and (11b) by calculation.

$$MO = [(37aa)+(37bb)+(37ee)+(37ff)+(37cc)+(37dd)]-$$
$$[(37mm)+(37nn)+(37qq)+(37rr)+(37oo)+(37pp)]$$
$$--- (11a)$$

$$MO = [(37ee)+(37ff)]-[(37qq+(37rr)]$$
$$--- (11b)$$

According to the magneto-optic signal MO obtained by the formula (11a), it is possible to obtain an average signal amplitude which is relatively large. On the other hand, according to the magneto-optic signal MO obtained by the formula (11b), it is possible to obtain a relatively high resolution. Moreover, the resolution obtainable according to the magneto-optic signal MO obtained by the formula (11b) is further improved compared to that obtainable according to the formula (5b). The reason for this further improved resolution of the magneto-optic signal MO using the composite prism 35B having the shape shown in FIG.19 may be understood from the teachings of the Proceedings of Magneto-Optical Recording International Symposium '96, J. Magn. Soc. Jpn., Vol.20, Supplement No.S1 (1996), pp.233-238.

The magneto-optic signal MO according to the above described formulas (11a) and (11b) can be generated by use of known adders and subtracter.

In this embodiment, it is of course possible to use the photodetector unit 66A shown in FIG.17 in place of the photodetector unit 66B. In this case, the focal error signal FES, the tracking error signal TES, the magneto-optic signal MO and the identification signal ID can be obtained by calculations similarly to the first embodiment described above based on the formulas (7) through (10).

In the first and further embodiments, it is of course possible to arrange the composite prism 35 or 35B between the analyzer 208A and the condenser lens 212, and the composite prism 35 or 35B, the condenser lens 212 and the analyzer 208A may be arranged in an arbitrary order.

In the first and further embodiments, the image formation point of the light beam used to generate the focal error signal FES according to the Foucault technique and the image formation point of the light beam used to generate the tracking error signal TES according to the push-pull technique are made mutually different by use of the composite prism. However, the method of making the image formation points of the light beams mutually different is not limited to that using the composite prism, and it is also possible to use a holographic optical element, for example.

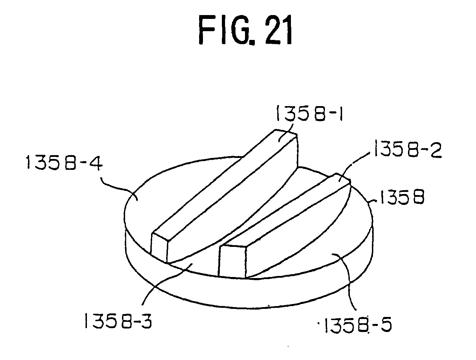

The composite prism is not limited to those of the embodiments described above. FIG.21 is a perspective view showing an embodiment of the composite prism. The composite prism shown in FIG.21 may be used in place of the composite prism 35B shown in FIGS.18 and 19, for example, and substantially the same effects are obtainable as in the embodiments described above.

As shown in FIG.21, a composite prism 135B includes tapered first and second parts 135B-1 and 135B-2, a central third part 135B-3 which has a concave surface with a slight curvature, and peripheral fourth and fifth parts 135B-4 and 135B-5 which have concave surfaces with a slight curvature matching that of the third part 135B-3. In other words, the third, fourth and fifth parts 135B-3, 135B-4 and 135B-5 are all parts of a single concave surface having a slight curvature. The first and second parts 135B-1 and 135B-2 function similarly to the first and second parts 35B-1 and 35B-2 of the composite prism 35B shown in FIG.19.

In the embodiments described above, the formulas used to generate the focal error signal FES, the tracking error signal TES, the magneto-optic signal MO and the identification signal ID were described, and an illustration and description of circuit structures which actually compute the formulas were omitted since they may be readily understood to those skilled in the art. A description will now be given of the circuit structures for computing the formulas (7) through (10) of the second embodiment described above, as an example.

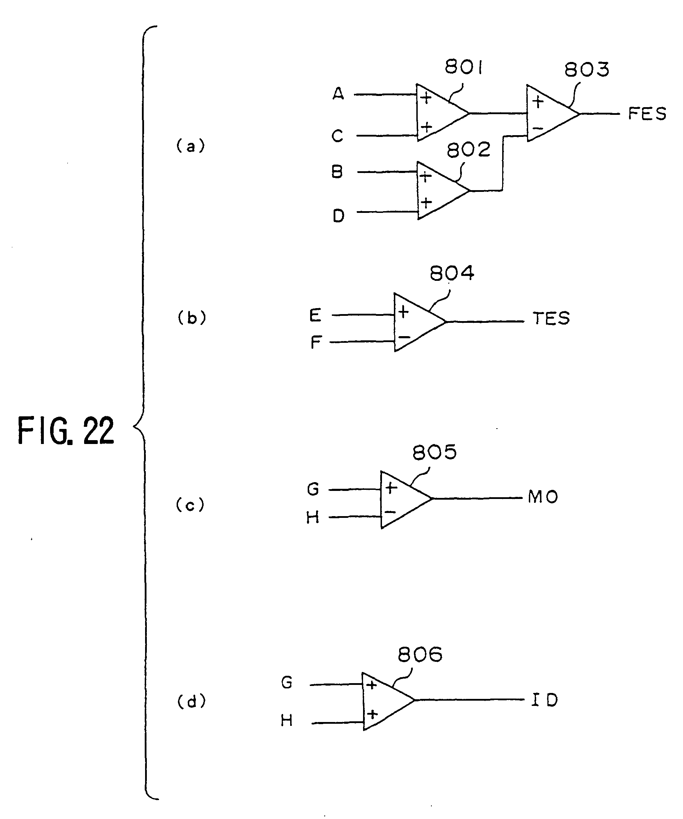

FIGS.22(a) through 22(d) respectively are circuit diagrams showing circuit structures for computing the formulas (7) through (10) in the first embodiment. FIG.22(a) shows a circuit structure for computing the formula (7), FIG.22(b) shows a circuit structure for computing the formula (8), FIG.22(c) shows a circuit structure for computing the formula (9), and FIG.22(d) shows a circuit structure for computing the formula (10).

FIG.22(a) shows a circuit including adders 801 and 802 and a subtracter 803 which are connected as shown to generate the focal error signal FES based on the outputs of the photodetector parts A through D.

FIG.22(b) shows a circuit including a subtracter 804 to generate the tracking error signal TES based on the outputs of the photodetector parts E and F.

FIG.22(c) shows a circuit including a subtracter 805 to reproduce the magneto-optic signal MO based on the outputs of the photodetector parts G and G.

FIG.22(d) shows a circuit including an adder 806 to reproduce the identification signal ID based on the outputs of the photodetector parts G and H.

The circuits for obtaining the focal error signal FES, the tracking error signal TES, the magneto-optic signal MO and the identification signal ID based on other formulas described above can similarly be constructed using known adders and subtracters, and the illustration of such circuits will be omitted in this application since the connections of the adders and subtracters are evident from the formulas.

## Claims

1. An optical information recording/reproducing apparatus which records information on and/or reproduces information from an optical recording medium (207) based on a reflected light beam from the optical recording medium, comprising:

   a light splitting part having a plurality of light splitting stages which split the reflected light beam from the optical recording medium into nine light beams, said light splitting part comprising an analyzer (208A) for splitting an incoming light beam into three polarized light beams of first through third rows, and an optical element (35) which spatially splits an incoming light beam into three light beams of first through third columns; and
   a photodetector unit (66A) which receives the nine light beams output from a last stage of said light splitting part, as spots of 3 columns x 3 rows that are made up of the first through third columns and the first through third rows,
   said optical element (35) comprising a first deflection surface (35c) having a curvature with respect to an optical axis of the reflected light beam from the optical recording medium, and second (35a) and third (35b) deflection surfaces provided on both sides of the first deflection surface and tapered in mutually different directions with respect to the optical axis,
   the light beams of the first and third rows from the second (35a) and third (35b) deflection surfaces respectively being arranged on both sides of the light beam of the second row from the deflection surface (35a), the light beams of the first and third columns being arranged on both sides of the light beam of the second column,
   said photodetector unit (66A) **characterised in**:

   a first photodetector (66A-5) arranged to receive by a single detector three spots of the first row of three light beams out of six light beams used to detect magneto-optical information recorded on the optical recording medium, of the nine light beams output from the last stage of the light splitting part;
   a second photodetector (66A-4) arranged to receive by a single detector three spots of the third row of three light beams out of the six light beams used to detect the magneto-optical information recorded on the optical recording medium, of the nine light beams output from the last stage of the light splitting part; and

a third photodetector (66A-1), a fourth photodetector (66A-2) and a fifth photodetector (66A-3) respectively arranged to receive three spots of the second row of three light beams that are made up of two light beams on both sides used to detect a focal error and one light beam at a center used to detect a tracking error, of the nine light beams output from the last stage of the light splitting part.

2. The optical information recording/reproducing apparatus as claimed in claim 1, **characterized in that** said analyzer (208A) and said optical element (35) being arranged in an arbitrary order between the optical recording medium (207) and said photodetector unit(66A).

3. The optical information recording/reproducing apparatus as claimed in claim 1 or 2, **characterized in that** each of the photodetectors (66A-1, 66A-2) which receive the light beams used to detect the focal error, receives one of the light beams output from a corresponding one of the second (35a) and third (35b) deflection parts of said optical element (35) which forms a larger spot on the photodetector than the other light beam.

4. The optical information recording/reproducing apparatus as claimed in claim 1, **characterized in that**:

the third and fourth photodetectors (66A-1, 66A-2) which are arranged to receive the light beams used to detect the focal error include 2 2-part photodetectors respectively having photodetector parts A and B and photodetector parts C and D; and

which further comprises:

means (801-803) for producing a focal error signal FES based on outputs of the 2-part photodetectors by a formula

$$FES = (A+C)-(B+D)$$

where the outputs of the photodetector parts are designated by the same designations as the photodetector parts.

5. The optical information recording/reproducing apparatus as claimed in claim 1, **characterized in that**:

the fifth photodetector (66A-3) which is arranged to receive the light beams used to detect the tracking error includes a 2-part photodetector having photodetector parts E and F; and

which further comprises:

means for producing a tracking error signal TES based on outputs of the 2-part photodetector by a formula

$$TES = E-F$$

where the outputs of the photodetector parts are designated by the same designations as the photodetector parts.

6. The optical information recording/reproducing apparatus as claimed in claim 1, **characterized in that**:

the first and second photodetectors (66A-5, 66A-4) which are arranged to receive the light beams used to detect the magneto-optical information include 2 photodetector parts G and H; and

which further comprises:

means (805) for producing an optical signal MO based on outputs of the photodetectors by a formula

$$MO = G-H$$

where the outputs of the photodetector parts are designated by the same designations as the photodetector parts.

7. The optical information
recording/reproducing apparatus as claimed in claim 1, **characterized in that**:

the first and second photodetectors (66A-5, 66A-4) which are arranged to receive the light beams used to detect the magneto-optical information include 2 photodetector parts G and H; and
which further comprises:

means (806) for producing an identification signal ID based on outputs of the photodetectors by a formula

ID = G+H

where the outputs of the photodetector parts are designated by the same designations as the photodetector parts.

8. The optical information
recording/reproducing apparatus as claimed in claim 1, **characterized in that**:

the third and fourth photodetectors (66A-1, 66A-2) which are arranged to receive the light beams used to detect the focal error include 2 2-part photodetectors respectively having photodetector parts A and B and photodetector parts C and D;
the fifth photodetector (66A-3) which is arranged to receive the light beams used to detect the tracking error signal includes 1 2-part photodetector having photodetector parts E and F;
the first and second photodetectors (66A-5, 66A-4) which are arranged to receive the light beams used to detect magneto-optical information include 2 photodetectors G and H; and

which further comprises:

means (801-806) for producing a focal error signal, a tracking error signal, an optical signal and an identification signal based on outputs of the photodetector parts.

**Patentansprüche**

1. Optische Informationsaufzeichnungs-/-wiedergahevorrichtung, die Informationen auf einem optischen Aufzeichnungsmedium (207) aufzeichnet und/oder von ihm wiedergibt, basierend auf einem reflektierten Lichtstrahl von dem optischen Aufzeichnungsmedium mit:

einem Lichtteilungsteil, der eine Vielzahl von Lichtteilungsstufen hat, die den reflektierten Lichtstrahl von dem optischen Aufzeichnungsmedium in neun Lichtstrahlen teilen, welcher Lichtteilungsteil einen Analysator (208A) zum Teilen eines ankommenden Lichtstrahls in drei polarisierte Lichtstrahlen von ersten bis dritten Reihen umfasst, und ein optisches Element (35), das einen ankommenden Lichtstrahl in drei Lichtstrahlen von ersten bis dritten Spalten räumlich teilt, und
einer Photodetektoreinheit (66A), die die neun Lichtstrahlen, die von einer letzten Stufe des Lichtteilungsteils ausgegeben werden, als Punkte von 3 Spalten x 3 Reihen empfängt, die aus den ersten bis dritten Spalten und den ersten bis dritten Reihen gebildet sind,

wobei das optische Element (35) eine erste Ablenkungsoberfläche (35c) umfasst, die eine Krümmung bezüglich einer optischen Achse des reflektierten Lichtstrahls von dem optischen Aufzeichnungsmedium hat, und zweite (35a) und dritte (35b) Ablenkungsoberflächen, die auf beiden Seiten der ersten Ablenkungsoberfläche vorgesehen sind und in gegenseitig verschiedenen Richtungen bezüglich der optischen Achse abgeschrägt sind,
die Lichtstrahlen der ersten und dritten Reihen von den zweiten (35a) und dritten (35b) Ablenkungsoberflächen jeweilig auf beiden Seiten des Lichtstrahls der zweiten Reihe von der Ablenkungsoberfläche (35c) angeordnet sind,
die Lichtstrahlen der ersten und dritten Spalten auf beiden Seiten des Lichtstrahls der zweiten Spalte angeordnet sind,
welche Photodetektoreinheit (66A) **gekennzeichnet ist durch**:

einen ersten Photodetektor (66A-5), der angeordnet ist, um **durch** einen einzelnen Detektor drei Punkte der ersten Reihe von drei Lichtstrahlen zu empfangen, aus sechs Lichtstrahlen, die verwendet werden, um magneto-optische Informationen zu detektieren, die auf dem optischen Aufzeichnungsmedium aufgezeichnet sind, von den neun Lichtstrahlen, die von der letzten Stufe des Lichtteilungsteils ausgegeben werden;
einen zweiten Photodetektor (66A-4), der angeordnet ist, um **durch** einen einzelnen Detektor drei Punkte der dritten Reihe von drei Lichtstrahlen zu empfangen, aus den sechs Lichtstrahlen, die verwendet werden, um die magneto-optischen informationen zu detektieren, die auf dem optischen Aufzeichnungsmedium aufgezeichnet sind, von den neun Lichtstrahlen, die von der letzten Stufe des Lichtteilungsteils ausgegeben werden; und
einen dritten Photodetektor (66A-1), einen vierten Photodetektor (66A-2) und einen fünften Photodetektor (66A-3), die jeweilig angeordnet sind, um drei Punkte der zweiten Reihe von drei Lichtstrahlen zu empfangen, die gebildet, sind aus zwei Lichtstrahlen auf beiden Seiten, die verwendet werden, um einen Fokusfehler zu delektieren, und einem Lichtstrahl in der Mitte, der verwendet wird, um einen Spurfehler zu detektieren, von den neuen Lichtstrahlen, die von der letzten Stufe des Lichtteilungsteils ausgegeben werden.

2. Optische Informationsaufzeichnungs-/-wiedergabevorrichtung nach Anspruch 1, **dadurch gekennzeichnet, dass** der Analysator (208A) und das optische Element (35) in einer beliebigen Ordnung zwischen dem optischen Aufzeichnungsmedium (207) und der Photodetektoreinhcit (66A) angeordnet sind.

3. Optische Informutionsaufzeichnungs-/-wiedergabevorrichtung nach Anspruch 1 oder 2, **dadurch gekennzeichnet, dass** jeder der Photodetektoren (66A-1, 66A-2), die die Lichtstrahlen empfangen, die verwendet werden, um den Fokusfehler zu detektieren, einen der LichtsLrahlen empfangt, die von einem entsprechenden der zweiten (35a) und dritten (35b) Ablenkungsteile des optischen Elementes (35) ausgegeben werden, der einen größeren Punkt auf dem Photodetektor als der andere Lichtstrahl bildet.

4. Optische Informationsaufzeichnungs-/-wiedorgabevorrichtung nach Anspruch 1, **dadurch gekennzeichnet, dass**:

die dritten und vierten Photodetektoren (66A-1, 66A-2), die angeordnet sind, um die Lichtstrahlen zu empfangen, die verwendet werden, um den Fokusfehler zu detektieren, 2 2-geteilte Photodetektoren enthalten, die jeweilig PhotodeLektorteile A und B und Photodetektorteile C und D haben; und
die ferner umfasst:

Mittel. (801-803) zum Erzeugen eines Fokusfehlersignals FES auf der Basis von Ausgaben der 2-geteilten Photodetektoren durch eine Formel

$$FES - (A+C)-(B+D),$$

wobei die Ausgaben der Photodetektorteile mit denselben Bezeichnungen wie die Photodetektorteile versehen sind.

5. Optische Informationsaufzeichnungs-/-wiedergabevorrichtung nach Anspruch 1, **dadurch gekennzeichnet, dass**:

der fünfte Photodetektor (66A-3), der angeordnet ist, um die Lichtstrahlen zu empfangen, die verwendet werden, um den Spurfehler zu detektieren, einen 2-geteilten Photodetektor enthält, der Photodetektorteile E und F hat; und
die ferner umfasst:

ein Mittel zum Erzeugen eines Spurfehlersignals TES auf der Basis von Ausgaben des 2-geteilten Photodetektors durch eine Formel

$$TES = E-F,$$

wobei die Ausgaben der Photodetektorteile mit denselben Bezeichnungen wie die Photodetektorteile versehen sind.

6. Optische Informationsaufzeichnungs-/-wiedergabevorrichtung nach Anspruch 1, **dadurch gekennzeichnet, dass**:

die ersten und zweiten Photodetektoren (66A-5, 66A-4), die angeordnet sind, um die Lichtstrahlen zu empfangen, die verwendet werden, um die magneto-optischen Informationen zu detektieren, 2 Photodetektorteile G und H enthalten; und

die ferner umfasst:

ein Mittel (805) zum Erzeugen eines optischen Signals MO auf der Basis von Ausgaben der Photodetektoren durch eine Formel

$$MO = G-H,$$

wobei die Ausgaben der Photodetektorteile mit denselben Bezeichnungen wie die Photodetektorteile versehen sind.

7. Optische Informationsaufzeichnugs-/-wiedergabevorrichtung nach Anspruch 1, **dadurch gekennzeichnet, dass**:

die ersten und zweiten Photodetektoren (66A-5, 66A-4), die angeordnet sind, um die Lichtstrahlen zu empfangen, die verwendet werden, um die magneto-optischen Informationen zu detektieren, 2 Photodetektorteile G und H enthalten; und
die ferner umfasst:

ein Mittel (806) zum Erzeugen eines Identifikationssignals ID auf der Basis von Ausgaben der Photodetektoren durch eine Formel

$$ID = G+H,$$

wobei die Ausgaben der Photodetektorteile mit denselben Bezeichnungen wie die Photodetektorteile versehen sind.

8. Optische Informationsaufzeichnungs-/-wiedergabevorrichtung nach Anspruch 1, **dadurch gekennzeichnet, dass**:

die dritten und vierten Photodetektoren (66A-1, 66A-2), die angeordnet sind, um die Lichtstrahlen zu empfangen, die verwendet werden, um den Fokusfehler zu detektieren, 2 2-geteilte Photodetektoren enthalten, die jeweilig Photodektorteile A und B und Photodetektorteile C und D haben;
der fünfte Photodetektor (66A-3), der angeordnet ist, um die Lichtstrahlen zu empfangen, die verwendet werden, um das Spurfehlersignal zu detektieren, 1 2-geteilten Photodetektor enthält, der Photodetektorteile E und F hat;
die ersten und zweiten Photodetektoren (66A-5, 66A-4), die angeordnet sind, um die Lichtstrahlen zu empfangen, die verwendet werden, um magneto-optische Informationen zu detektieren, 2 PhotodetekLoren G und H enthalten; und
die ferner umfasst:

Mittel (801-806) zum Erzeugen eines Fokusfehlersignals, eines Spurfehlersignals, eines optischen Signals und eines Identifikationssignals auf der Basis von Ausgaben der Photodetektorteile.

**Revendications**

1. Appareil d'enregistrement/reproduction d'informations optiques, enregistrant des informations sur un support (207) d'enregistrement optique et/ou reproduisant des informations à partir de celui-ci, sur la base d'un faisceau de lumière réfléchie provenant du support d'enregistrement optique, comprenant :

une partie de division de lumière ayant une pluralité d'étages de division de lumière qui divisent le faisceau de lumière réfléchie provenant du support d'enregistrement optique en neuf faisceaux lumineux, ladite partie de division de lumière comprenant un analyseur (208A) conçu pour diviser un faisceau lumineux entrant en trois faisceaux lumineux polarisés de première à troisième rangées, et un élément (35) optique qui divise spatialement un faisceau lumineux entrant en trois faisceaux lumineux de première à troisième colonnes ; et
une unité (66A) photodétectrice qui reçoit les neuf faisceaux lumineux émis en sortie d'un dernier étage de ladite partie de division de lumière, sous forme de points lumineux de 3 colonnes x 3 rangées qui sont composés des première à troisième colonnes et des première à troisième rangées,
ledit élément (35) optique comprenant une première surface (35c) de déviation ayant une courbure par rapport à un axe optique du faisceau de lumière réfléchie provenant du support d'enregistrement optique, et des deuxième (35a) et troisième (35b) surfaces de déviation prévues des deux côtés de la première surface de déviation et effilées dans des directions différentes l'une de l'autre, par rapport à l'axe optique, les faisceaux lumineux des première et troisième rangées provenant des deuxième (35a) et troisième (35b) surfaces de déviation, étant disposés respectivement des deux côtés du faisceau lumineux de la deuxième rangée provenant de la surface (35a) de déviation, les faisceaux lumineux des première et troisième colonnes étant disposés des deux côtés du faisceau lumineux de la deuxième colonne, ladite unité (66A) photodétectrice étant **caractérisée par** :

un premier photodétecteur (66A-5) agencé pour recevoir au moyen d'un détecteur unique trois points lumineux de la première rangée de trois faisceaux lumineux sur six faisceaux lumineux utilisés pour détecter des informations magnéto-optiques enregistrées sur le support d'enregistrement optique, des neuf faisceaux lumineux émis en sortie du dernier étage de la partie de division de lumière ;
un deuxième photodétecteur (66A-4) agencé pour recevoir au moyen d'un détecteur unique trois points lumineux de la troisième rangée de trois faisceaux lumineux sur les six faisceaux lumineux utilisés pour détecter les informations magnéto-optiques enregistrées sur le support d'enregistrement optique, des neuf faisceaux lumineux émis en sortie du dernier étage de la partie de division de lumière ; et
un troisième photodétecteur (66A-1), un quatrième photodétecteur (66A-2) et un cinquième photodétecteur (66A-3), agencés respectivement pour recevoir trois points lumineux de la deuxième rangée de trois faisceaux lumineux qui se composent de deux faisceaux lumineux des deux côtés, utilisés pour détecter une erreur focale et d'un faisceau lumineux en un centre, utilisé pour détecter une erreur de piste, des neuf faisceaux lumineux émis en sortie du dernier étage de la partie de division de lumière.

2. Appareil d'enregistrement/reproduction d'informations optiques selon la revendication 1, **caractérisé en ce que** ledit analyseur (208A) et ledit élément (35) optique sont disposés dans un ordre arbitraire entre le support (207) d'enregistrement optique et ladite unité (66A) photodétectrice.

3. Appareil d'enregistrement/reproduction d'informations optiques selon la revendication 1 ou 2, **caractérisé en ce que** chacun des photodétecteurs (66A-1, 66A-2) qui reçoivent les faisceaux lumineux utilisée pour détecter l'erreur focale, reçoit l'un des faisceaux lumineux émis en sortie de l'une correspondante des deuxième (35a) et troisième (35b) parties de déviation dudit élément (35) optique, qui forme sur le photodétecteur un point lumineux plus grand que l'autre faisceau lumineux.

4. Appareil d'enregistrement/reproduction d'informations optiques selon la revendication 1, **caractérisé en ce que** :

les troisième et quatrième photodétecteurs (66A-1, 66A-2) qui sont agencés pour recevoir les faisceaux lumineux utilisés pour détecter l'erreur focale, comprennent deux photodétecteurs en deux parties ayant respectivement des parties A et B de photodétecteur et des parties C et D de photodétecteur ; et comprenant en outre :

des moyens (801 à 803) destinés à produire un signal FES d'erreur focale, sur la base de sorties des photodétecteurs en deux parties, au moyen d'une formule :

$$FES = (A + C) - (B + D)$$

où les sorties des parties de photodétecteurs sont désignées par les mêmes désignations que les parties de photodétecteurs.

5. Appareil d'enregistrement/reproduction d'informations optiques selon la revendication 1, **caractérisé en ce que** :

le cinquième photodétecteur (66A-3) qui est agencé pour recevoir les faisceaux lumineux utilisés pour détecter l'erreur de piste comprend un photodétecteur en deux parties ayant des parties E et F de photodétecteur ; et comprenant en outre :

des moyens destinés à produire un signal TES d'erreur de piste, sur la base de sorties du photodétecteur en deux parties, au moyen d'une formule :

$$TES = E - F$$

16

où les sorties des parties de photodétecteur sont désignées par les mêmes désignations que les parties de photodétecteur.

6. Appareil d'enregistrement/reproduction d'informations optiques selon la revendication 1, **caractérisé en ce que** :

les premier et deuxième photodétecteurs (66A-5, 66A-4) qui sont agencés pour recevoir les faisceaux lumineux utilisés pour détecter les informations magnéto-optiques comprennent deux parties G et H de photodétecteurs ; et

comprenant en outre :

un moyen (805) destiné à produire un signal optique MO sur la base de sorties des photodétecteurs, au moyen d'une formule :

$$MO = G - H$$

où les sorties des parties de photodétecteurs sont désignées par les mêmes désignations que les parties de photodétecteurs.

7. Appareil d'enregistrement/reproduction d'informations optiques selon la revendication 1, **caractérisé en ce que** :

les premier et deuxième photodétecteurs (66A-5, 66A-4) qui sont agencés pour recevoir les faisceaux lumineux utilisés pour détecter les informations magnéto-optiques comprennent deux parties G et H de photodétecteurs ; et

comprenant en outre :

un moyen (806) destiné à produire un signal ID d'identification, sur la base de sorties des photodétecteurs, au moyen d'une formule :

$$ID = G + H$$

où les sorties des parties de photodétecteurs sont désignées par les mêmes désignations que les parties de photodétecteurs.

8. Appareil d'enregistrement/reproduction d'informations optiques selon la revendication 1, **caractérisé en ce que** :

les troisième et quatrième photodétecteurs (66A-1, 66A-2) qui sont agencés pour recevoir les faisceaux lumineux utilisés pour détecter l'erreur focale comprennent deux photodétecteurs en deux parties, ayant respectivement des parties A et B de photodétecteur et des parties C et D de photodétecteur ;
le cinquième photodétecteur (66A-3) qui est agencé pour recevoir les faisceaux lumineux utilisés pour détecter le signal d'erreur de piste comprend un photodétecteur en deux parties ayant des partie E et F de photodétecteur ;
les premier et deuxième photodétecteurs (66A-5, 66A-4) qui sont agencés pour recevoir les faisceaux lumineux utilisés pour détecter des informations magnéto-optiques comprennent deux photodétecteurs G et H ; et

comprenant en outre :

des moyens (801 à 806) destinés à produire un signal d'erreur focale, un signal d'erreur de piste, un signal optique et un signal d'identification, sur la base de sorties des parties de photodétecteurs.

# FIG. 1

FIG. 2

FIG. 3

(a)

212

214

TES=A−B>0

(b)

212

214

TES=0

(c)

212

214

TES<0

# FIG. 4

# FIG. 5

FIG. 6

(a) NEAR DISK

(b) IN FOCUS

(c) FAR FROM DISK

207
206
207
206
207
206

FIG. 7

(a)

FES=(A-B)+(C-D)>0

(b)

FES=0

(c)

FES<0

# FIG. 8

LIGHT INTENSITY

O

DECENTERING OF INCIDENT LIGHT DISTRIBUTION

y

## FIG. 9

207
206
202 204
205
201
208A
212 3 BEAMS
35
3 × 3 = 9 BEAMS
66

## FIG. 10

30 208A
212
35
35a
35c
L3
L1,L2
35b
66

# FIG. 11

66

| 66a | 66c | 66b |
|---|---|---|
| 37a | 37e 37f | 37c |
| 37b | | 37d |

| 66d | 66f | 66e |
|---|---|---|
| 37g | 37k 37l | 37i |
| 37h | | 37j |

| 66g | 66i | 66h |
|---|---|---|
| 37m | 37q 37r | 37o |
| 37n | | 37p |

# F I G. 12A

```
37 a ——————  +
37 g ——————  +
37 m ——————  +         501
37 d ——————  +
37 j ——————  +
37 p ——————  +
```

```
              +          503
              −            FES
```

```
37 b ——————  +
37 h ——————  +
37 n ——————  +         502
37 c ——————  +
37 i ——————  +
37 o ——————  +
```

# F I G. 12B

```
37 a ——————  +          511
37 p ——————  +
```

```
              +          513
              −            FES
```

```
37 b ——————  +          512
37 o ——————  +
```

# F I G. 12C

```
37 m ——————  +          521
37 d ——————  +
```

```
              +          523
              −            FES
```

```
37 n ——————  +          522
37 c ——————  +
```

# FIG. 12D

37 a
37 d
37 m
37 p
531
532
533
FES

37 b
37 c
37 n
37 o

# FIG. 13A

37 e
37 k
37 q
541
542
543
TES

37 f
37 l
37 r

# FIG. 13B

37 e
37 q
551
552
553
TES

37 f
37 r

# FIG. 14A

# FIG. 14B

# F I G. 15

37 a
37 b
37 e
37 f
37 c
37 d
37 m
37 n
37 q
37 r
37 o
37 p

581

I D

# FIG. 16

# FIG. 17

# FIG. 18

# FIG. 19

358-1
358-2
358-4
358
358-3
358-5

# FIG. 20

| 66aa | 66cc | 66bb |
|---|---|---|
| 37aa | 37ee 37ff | 37cc |
| 37bb | | 37dd |
| 66dd | 66ff | 66ee |
| 37gg | 37kk 37ll | 37ii |
| 37hh | | 37jj |
| 66gg | 66ii | 66hh |
| 37mm | 37qq 37rr | 37oo |
| 37nn | | 37pp |

66B

# FIG. 21

1358-1

1358-2

1358-4

1358

1358-3

1358-5

FIG. 22

(a)

801

A
C

+
+

802

B
D

+
+

803

+
−

FES

(b)

804

E
F

+
−

TES

(c)

805

G
H

+
−

MO

(d)

806

G
H

+
+

ID

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0630005 A

- JP 63127436 A

**Non-patent literature cited in the description**

- Proceedings of Magneto-Optical Recording International Symposium '96. *J. Magn. Soc. Jpn.,* 1996, vol. 20 (S1), 233-238